# EUROPEAN PATENT APPLICATION

(11) **EP 2 515 287 A1**
(43) Date of publication of application: **24.10.2012**
(21) Application number: 10837706.0
(22) Date of filing: 13.12.2010
(51) Int. Cl.: G09F 9/00, G02F 1/1333

(54) **HOUSING, ELECTRONIC APPARATUS, AND METHOD FOR CONTAINING DISPLAY PANEL**

(30) Priority: 17.12.2009 JP 2009285885
(71) Applicant: NEC Corporation, Tokyo 108-8001 (JP)
(72) Inventor: SHIOGAMA, Naoki, Tokyo 108-8001 (JP); OSAKO, Tomofumi, Tokyo 108-8001 (JP)
(74) Representative: Vossius & Partner
(86) International application number: PCT/JP2010/072822
(87) International publication number: WO 2011/074682

(57) **Abstract**

A display panel can be expanded without increasing the size and without reducing the sealing function including the waterproof function while the display panel is prevented from deforming due to a strong sealing force.

A housing 1 includes a first housing member 3 and a second housing member 4. The first housing member 3 includes a wall 7 surrounding a display-panel-holding-space 11 to hold a display panel 2 being a holding target. The second housing member 4 closes an opening of the display-panel-holding-space 11 whose opening edge is an end face of the wall 7 by coming into contact with or connecting with the end face of the wall 7. A space 13 that goes around the opening of the display-panel-holding-space 11 is formed in a border region including a contacting part or a connecting part of the wall 7 and the second housing member 2. An elastic member 14 is arranged in the space 13. An edge part of the display panel 2 is arranged closer to an edge face opposite side to the end face of the wall 7 than the elastic member 14.

## Description

### [Technical Field]

The present invention relates to a housing which is applied to an electronic apparatus or the like equipped with a display panel such as a liquid crystal panel, and the present invention further relates to an electronic apparatus and a method of holding the display panel.

### [Background Art]

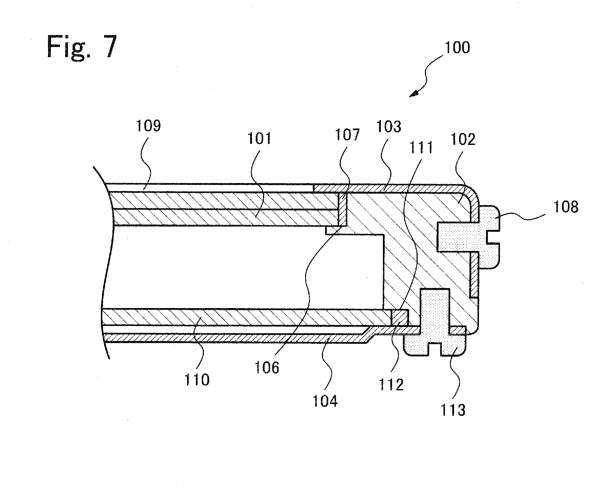

Fig. 7 is a cross section diagram that schematically indicates a part of a housing which holds a liquid crystal panel as a kind of display panels (refer to a patent literature 1). For example, the housing 100 is applied to an electronic apparatus such as a cellular phone equipped with a liquid crystal panel 101. The housing 100 includes a case main body 102, a upper cover 103 and a lower cover 104.

The case main body 102 is an annular frame member. In the internal wall face of the frame of the case main body 102, a liquid crystal panel holding part 106 is installed on a part facing onto an end face of the liquid crystal panel 101. An edge part of the liquid crystal panel 101 fits to the liquid crystal panel holding part 106. A packing 107 in a compression state is interposed between the end face of the liquid crystal panel 101 and an internal wall face of the liquid crystal panel holding part 106 which are in the fitting state. By press force with the packing 107, the liquid crystal panel 101 is fixed on the case main body 102. The packing 107 has a waterproof function because the packing 107 fills the gap between the end face of the liquid crystal panel 101 and the internal wall face of the liquid crystal panel holding part 106.

The upper cover 103 is arranged so as to cover the liquid crystal panel 101 and the case main body 102. The upper cover 103 is fixed to the case main body 102 by a screw 108. The upper cover 103 is equipped with a display window 109 so that the liquid crystal panel 101 can be seen from outside.

The housing 100 accommodates not only the liquid crystal panel 101 but also a printed wiring board 110 in a state where they are arranged in parallel with the liquid crystal panel 101. On the internal wall face of the case main body 102, a printed wiring board holding part 111 is formed on a part facing onto the end face of the liquid crystal panel 101. The printed wiring board holding part 111 is fitted in an edge part of the printed wiring board 110. A packing 112 in a compression state is interposed between an end face of the printed wiring board 110 and an internal wall face of the printed wiring board holding part 111 which are in the fitting state. By pressing force with the packing 112, the printed wiring board 110 is fixed on the case main body 102. The packing 112 also has the waterproof function as well as the packing 107.

The lower cover 104 is arranged so as to cover the printed wiring board 110 and the case main body 102. The lower cover 104 is fixed to the case main body 102 by a screw 113.

### [Citation List]

### [Patent Literature]

**[PTL 1]** Japanese Patent Application Laid-Open No. 2000-223858

### [Summary of Invention]

### [Technical Problem]

In recent years, multi-functionality of an electronic apparatus such as a cellular phone or the like equipped with a display panel such as a liquid crystal panel has being advanced. As a result, it is supposed that the electronic apparatus is utilized in various situations. As one of those situations, it is supposed that the electronic apparatus is utilized around an equipment such as a kitchen or a restroom where water is used. Hence, the waterproof functionality of the electronic apparatus is desired to be improved.

In order that the packing 107 of the housing 100 is capable of the waterproof function, the packing 107 needs to push the wall of the cover body 102 and the upper cover 103 with the strong force. In order to get the strong depressing force, the packing 107 has a certain degree of thickness. In other words, in a case that the waterproof function is needed, it is difficult that the packing 107 becomes thin.

In the configuration shown in the Fig. 7, the large force is applied to the case body 102 from the packing 107 in a same direction (a crosswise direction in the Fig. 7) as a direction along a panel surface of the liquid crystal panel 101. Therefore, it is preferable that the case body 102 become thick in the direction (the crosswise direction in the Fig. 7) on which the pressing force acts so that the case body 102 can have a mechanical strength against the depressing force from the packing 107. In contrast, if the thickness of the case body 102 (the thickness of the frame) becomes thin, the case body 102 is transformed by the pressing force from the packing 107. As a result, the problem will take place that the waterproof functionality or the like of the housing 100 may be reduced.

As mentioned above, in the structure shown in the Fig. 7, it is restricted that the packing 107 and the frame of the case body 102 become thin, because of improving the waterproof functionality. Hence, if the liquid crystal panel 101 increases in size, the housing 100 has to be inevitably increased in size. However, the electronic apparatus such as the cellular phone is requested to miniaturize. Therefore, the housing 100 cannot be increased in size. Accordingly, the problem takes place that it is difficult to increase the liquid crystal panel 101 in size.

In the configuration of the Fig. 7, the strong force is applied to the liquid crystal panel 101 from the packing 107 in the direction along the panel surface (the crosswise direction in the Fig. 7). In order to improve the waterproof performance, the depressing force from the packing 107 to the liquid crystal panel 101 has to become increasingly strong. For this reason, the serious problem may take place that the liquid crystal panel 101 deforms because of the depressing force.

The present invention is devised in order to settle the above-mentioned problem. That is, the main object of the present invention is to provide the housing in which a display panel can be expanded, while avoiding deformation of the display panel due to a strong sealing force, without increasing the size of the display panel and without reducing the sealing function including the waterproof function.

### [Solution to Problem]

A housing according to the present invention includes
a first housing member that includes a wall surrounding a display-panel-holding-space to hold a display panel being a holding target; and
a second housing member that closes an opening of the display-panel-holding-space whose opening edge is an end face of the wall by coming into contact with or connecting with the end face of the wall,
wherein a space that goes around the opening of the display-panel-holding-space is formed in a border region including a contacting part or a connecting part of the wall and the second housing member, an elastic member is arranged in the space, and
an edge arrangement area where an edge part of the display panel is arranged is closer to an edge face opposite side to the end face of the wall than the elastic member.

An electronic apparatus according to the present invention includes
a housing according to the present invention; and
a display panel that is held in the housing.

An method of holding a display panel according to the present invention includes
forming a space that goes around an opening of a display-panel-holding-space to hold a display panel being a holding target in a border region including a contact part or a connecting part of a wall surrounding the display-panel-holding-space in a first housing member and a second housing member closing an opening of the display-panel-holding-space whose opening edge is an end face of the wall by coming into contact with or connecting with the end face of the wall;
arranging an elastic member in the space; and
arranging an edge part of the display panel in an area closer to the end face opposite side to the end face of the wall than the elastic member.

### [Advantageous Effects of Invention]

According to the present invention, a display panel can be expanded, while avoiding deformation of the display panel due to a strong sealing force, without increasing the size of the display panel and without reducing the sealing function including the waterproof function.

### [Brief Description of Drawings]

Fig. 1A is a cross section diagram showing schematically a part of a housing of a first exemplary embodiment according to the present invention.
Fig. 1B is a block diagram showing simply a configuration of the electronic apparatus of the first exemplary embodiment according to the present invention.
Fig. 2 is a diagram illustrating an effect of the first exemplary embodiment according to the present invention.
Fig. 3 is a schematic exploded view representing a housing of a second exemplary embodiment according to the present invention with a liquid crystal panel.
Fig. 4A is a schematic cross section diagram illustrating the housing of the second exemplary embodiment according to the present invention.
Fig. 4B is a cross section diagram showing the expanded configuration within the Z area shown in the Fig. 4A.
Fig. 5A is a cross section diagram illustrating an other exemplary embodiment according to the present invention.
Fig. 5B is a cross section diagram illustrating another exemplary embodiment according to the present invention.
Fig. 6A is a cross section diagram illustrating another more exemplary embodiment according to the present invention.
Fig. 6B is a cross section diagram illustrating still another exemplary embodiment according to the present invention.
Fig. 6C is a cross section diagram illustrating still another more exemplary embodiment according to the present invention.
Fig. 7 is the diagram illustrating the structure of the housing indicated in the patent literature 1.

### [Description of Embodiments]

The following will describe an exemplary embodiment according to the present invention with reference to the drawings.

### (First exemplary embodiment)

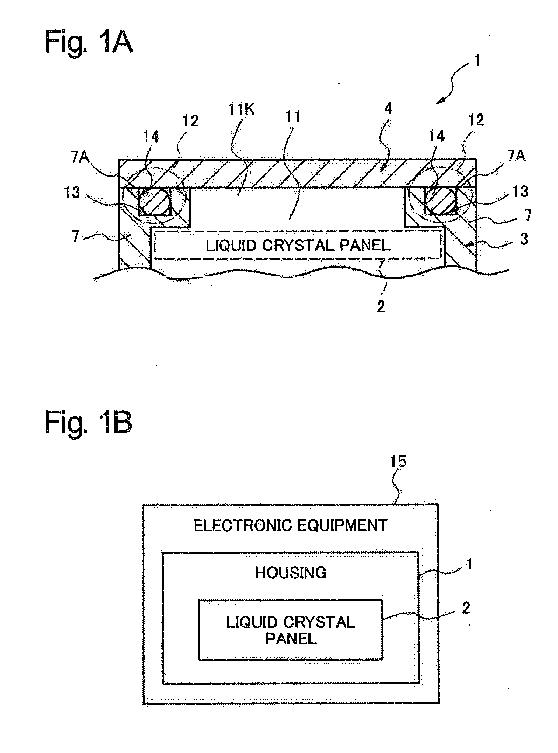

Fig. 1A is the cross section diagram showing schematically a part of a housing of a first exemplary embodiment according to the present invention. The housing 1 is equipped with a structure that holds a display panel 2. The housing 1 includes a first housing member 3 and a second housing member 4. The first housing member 3 has a wall 7. The wall 7 surrounds a display-panel-holding-space 11 accommodating the display panel 2.

The second housing member 4 comes into contact with or connects with an edge face 7A of the wall 7 in the first housing member 3, and covers an opening 11K of the display-panel-holding-space 11 in which an end face 7A is the opening edge.

A space 13 which goes around the opening 11K of the display-panel-holding-space 11 is formed in a border region 12 including the contacting part or the connecting part between the second housing member 4 and the wall 7 of the first housing member 3. An elastic member 14 is arranged in the space 13. An edge part of the display panel 2 is arranged in an area closer to an opposite side end face of the end face 7A on the wall 7 than the elastic member 14 (that is, the lower side of the Fig. 1A than the elastic member 14).

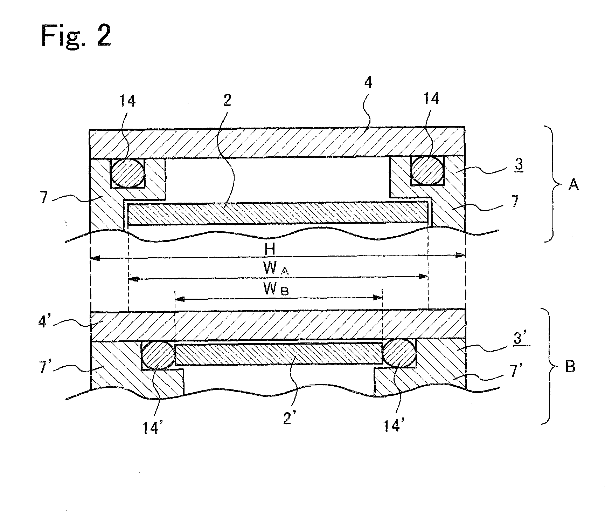

The housing 1 in the first exemplary embodiment can enjoy a following effect. That is, in the configuration of the patent literature 1, as shown in a part B of Fig. 2, an end face of a display panel 2' and a wall 7' put in an elastic member 14' in between and are arranged in the direction (hereinafter, referred as panel horizontal direction) along a panel surface of the display panel 2'. In this configuration, a depressing force in the panel horizontal direction by the display panel 2 'and the elastic member 14' acts on the wall 7'. For this reason, the wall 7' is designed to have a thickness with the sufficient strength in consideration of the depressing force.

Here, it is assumed that a width of the housing 1 (a first housing member 3') in response to a request to miniaturize is set to a width H as shown in the Fig. 2. Furthermore, it is assumed that a width of the display panel 2' is set to a width W_{B} as shown in the Fig. 2 by considering the width H of the housing 1, a thickness of the wall 7' and a thickness of the elastic member 14'.

In contrast, in this first exemplary embodiment, the structure shown in a part A in the Fig. 2 is different from the structure shown in the part B in the Fig. 2 with respect to an arrangement relation among the display panel 2, the elastic member 14 and the wall 7. That is, in this first exemplary embodiment, the elastic member 14 is not installed between the end face of the display panel 2 and the wall 7. And the edge part of the display panel 2 is arranged separate from the elastic member 14 in the lower side than the elastic member 14 shown in the Fig. 2. In this configuration, the end face of the display panel 2 can be closer to the wall 7 by the space to result from not installing the elastic member 14 between the end face of the display panel 2 and the wall 7. Therefore, the size of the display panel 2 can be expanded.

In addition, the strong depressing force in the panel horizontal direction from the display panel 2' and the elastic member 14' as shown in the part B in the Fig. 2 does not act on a part of the wall 7 facing to the end face of the display panel 2. For this reason, in comparison with the a case that the depressing force acts on the part of the wall 7 facing to the end face of the display panel 2, it is possible to increase the part of the wall 7 facing to the end face of the display panel 2 in strength. Thus, the thickness of the wall part can be made thin. In this way, the size of the display panel 2 can be more expanded by making the wall 7 be thin.

In the configuration of this first exemplary embodiment, even if the both widths H of the first housing members 3 and 3' are equal as mentioned above, a width W_{A} of the display panel 2 can be wider than a width W_{B} of the display panel 2'. In addition, in the configuration of this first exemplary embodiment, the depressing force with the elastic member 14 is not applied to the display panel 2. For this reason, a problem that the display panel 2 is distorted by the depressing force with the elastic member 14 can be avoided.

Accordingly, the housing 1 enable to expand the size of the display panel 2 without reducing the sealing function including the waterproof function by the elastic member 14 and without increasing the housing 1 while avoiding deformation of the display panel due to a strong sealing force.

As shown in Fig. 1B, the housing 1 in this first exemplary embodiment can compose an electronic apparatus 15 together with the display panel 2. Because the electronic apparatus 15 has the housing 1 in this first exemplary embodiment, the equipped display panel 2 can be increased in size without increasing the electronic apparatus 15 in size.

### (Second exemplary embodiment)

A second exemplary embodiment according to the present invention will be described below.

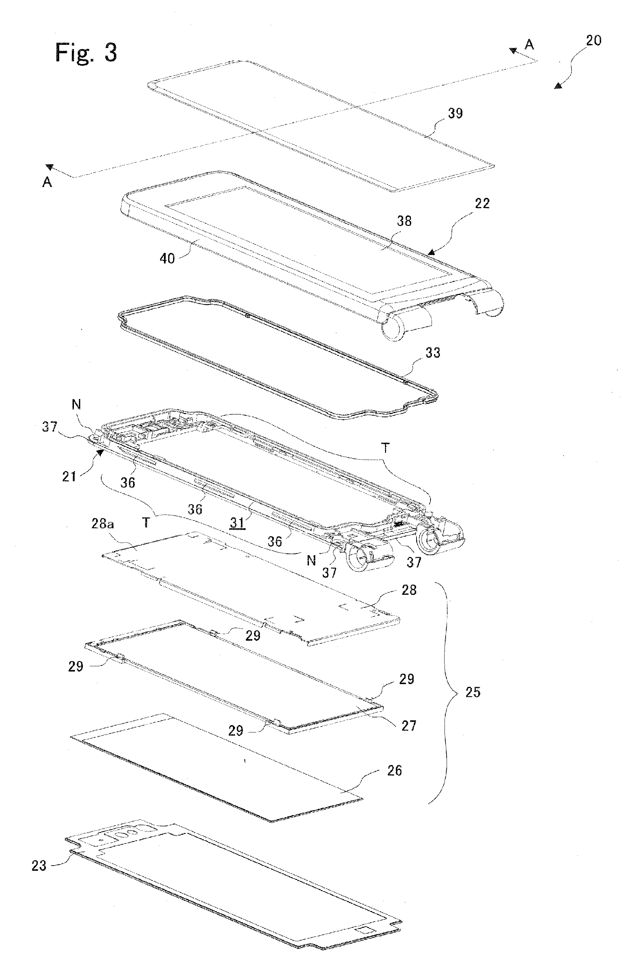

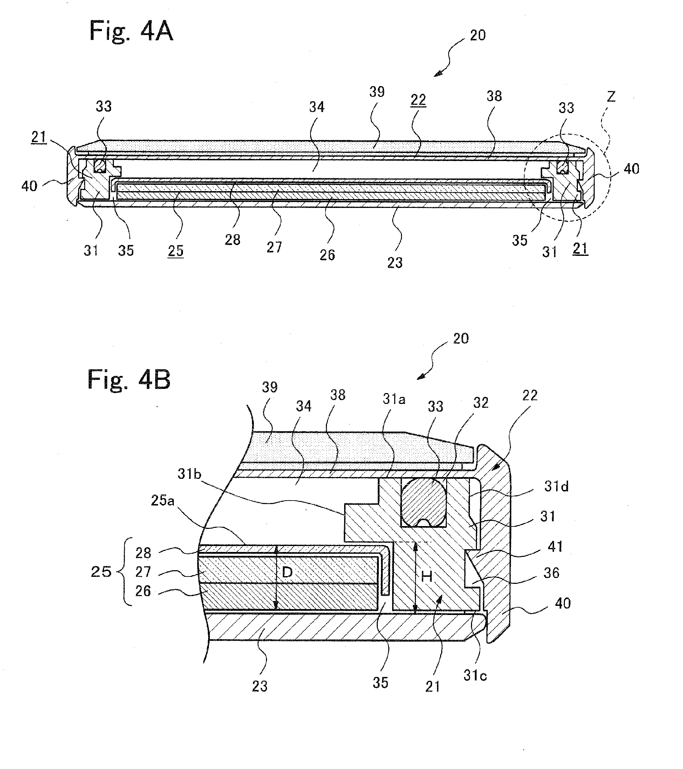

In this second exemplary embodiment, a housing is a component of a mobile (cellar phone) which is an electronic apparatus equipped with a liquid crystal panel being a display panel. Fig. 3 is an exploded view representing the housing in the second embodiment schematically together with a liquid crystal panel. Fig. 4A is a schematic cross section diagram showing a part A-A in the housing shown in the Fig. 3. Fig. 4B is a schematic enlarged diagram showing an area Z shown in the Fig. 4A.

A housing 20 in this second exemplary embodiment accommodates a liquid crystal panel 25 describing below. That is, the liquid crystal panel 25 includes the configuration in which a liquid crystal body 26, a plastic frame 27 and a metal frame 28 are integrated. The plastic frame 27 is a protective member which protects the liquid crystal body 26 by covering a reverse face side of the liquid crystal body 26. The liquid crystal body 26 connects with the plastic frame 27 by an adhesive material (a double-stick tape, for example). The metal frame 28 is a reinforcing member which reinforces the liquid crystal body 26 and the plastic frame 27. For example, a metal material which composes the metal frame 28 is stainless (SUS (Stainless-Used-Steel)). The metal frame 28 and the structure in which the liquid crystal panel 26 connects with the plastic frame 27 can be integrated as follows. For example, as shown in Fig. 3, a hook 29 projects from the plastic frame 27 toward the metal frame 28. The hook 29 is formed so as to fit with the metal frame 28 by stopping in an engaged state an edge 28a of the metal frame 28. In other words, the connected structure of the liquid crystal panel 26 and the plastic frame 27 is integrated with the metal frame 28 by fitting the hook 29 in the metal frame 28.

In the second exemplary embodiment, the housing 20 accommodating the above-mentioned liquid crystal panel 25 includes a first housing member 21, a second housing member 22 and a cover member 23. The first housing member 21 includes a wall 31 which goes around an edge part of the liquid crystal panel 25. In other words, the wall 31 surrounds a liquid crystal-panel-holding-space 34 which accommodates the liquid crystal panel 25. An ditch (space) 32, which opens to an end face 31a of the side of the second housing member 22, is formed on the wall 31. The ditch 32 is formed on the wall 31 along a direction which goes around the edge part of the liquid crystal panel 25. In other words, in the end face 31a of the side of the second housing member 22 on the wall 31, the ditch 32 is formed so as to go around an opening of the liquid crystal -panel-holding-space 34 whose opening edge is the end face 31a. An elastic member 33 fits in the ditch 32. The elastic member 33 is equipped with the waterproof function for liquid crystal panel-holding-space 34.

A panel-edge-placing-region 35 is formed further on the wall 31. The panel-edge-placing-region 35 opens to an internal wall face 3 1 b and an end face 31c (the end face opposite side to the end face 31a) on the wall 31. In this second exemplary embodiment, the liquid crystal panel 25 has a rectangular shape, and the panel-edge-placing-region 35 is formed in the part T which is corresponding to the long side of the liquid crystal panel 25 with a rectangle shape. In other words, the panel-edge-placing-region 35, which holds the long side in the edge part of the liquid crystal panel 25, is formed on the wall 31. The edge part of the liquid crystal panel 25 is held in the panel-edge-placing-region 35.

According to the second exemplary embodiment, the area where the edge part of the liquid crystal panel 25 is arranged is lower in the Fig. 4A and the Fig. 4B than the elastic member 33 (in other words, closer area to the end face 31c on the wall 31 than the elastic member 33).

A concave part 36 is formed on an external wall surface 31d on the wall 31. In the second exemplary embodiment, the concave part 36 is formed in a part (the part T in the Fig. 3) facing to the long side of the liquid crystal panel 25 on the wall 31. An internal wall face of the concave part 36 functions as a receiving part which stops in an engaged state a hook (locking part) 41 formed in an extended part 40 of the second housing member 22.

Furthermore, the first housing member 21 includes a extension part 37 projecting from the wall 31 as shown in the Fig. 3. A screw hole N is formed in the extension part 37. In the example shown in the Fig. 3, the first housing member 21 is an approximately square shape. The extension part 37 is formed in four corner parts of the first housing member 21. The screw hole N is formed in the extension part 37.

For example, the cover member 23 consists from transparent resin material. The cover member 23 is arranged so as to cover an obverse surface side of the liquid crystal panel 25 fitting in the wall 31 of the first housing member 21. In other words, the cover member 23 has a function to protect the liquid crystal panel 25 without intercepting luminous light from the liquid crystal panel 25.

The cover member 23 closes the opening of the panel-edge-placing-region 35 which is formed on the end face 31c of the wall 31, and is integrated with the first housing member 21 in the state of connecting with the end face 31c of the wall 31 by the adhesive material (double-stick tape, for example). In the second exemplary embodiment, the interval H (referring to the Fig. 4B) between the cover member 23 and the internal wall face of the panel-edge-placing-region 35 facing to the cover member 23 is slightly longer than a thickness D of the liquid crystal panel 25. In other words, the interval H gets larger in size than the thickness D of the liquid crystal panel 25 so that the liquid crystal panel 25 fits to the panel-edge-placing-region 35 without being unstable. As the result, the liquid crystal panel 25 gets held by the internal wall face of the panel-edge-placing-region 35 and the cover member 23.

The second housing member 22 includes a cover member 38 and the extended part 40. The cover member 38 is arranged in an upper side of the liquid crystal panel-holding-space 34 shown in Figs. 3 and 4B and comes in contact with the end face 31a on the wall 31 of the first housing member 21. As the result, the cover member 38 closes the opening of the ditch 32 on the wall 31 and compresses the elastic member 33 in the ditch 32. In other words, the respective sizes of the elastic member 33 and the ditch 32 are designed as follows with both considerations. That is, the elastic member 33 in the ditch 32 is made so as to stick to the cover member 38 with the elastic force by deforming in a case that the cover member 38 closes the opening of the ditch 32 by coming into contact with the end face 31 a on the wall 31 of the first housing member 21.

In the second exemplary embodiment, a plate member (dressing board plate) 39 is fixed by the adhesive material (double-stick tape, for example) on the external surface (upper face in Fig. 3) of the cover member 38.

The extended part 40 of the second housing member 22 is equipped with the form that expands from the cover member 38 along the external wall surface 31d of the wall 31 in the first housing member 21, The hook 41 is formed in the extended part 40 as above-mentioned (referred to Fig. 4B). The hook 41 is installed in a position according to the position where the concave part 36 is formed on the wall 31, and stops in the engaged state in the internal wall face of the concave part 36 on the wall 31 as above-mentioned. In this second exemplary embodiment, by stopping in the engaged state (fitting in the hook) the hook 41 of the extended part 40 with the internal wall face of the concave part 36 on the wall 31, the first housing member 21 and the second housing member 22 are integrated with intertwining. In this second exemplary embodiment, the first housing member 21 and the second housing member 22 are fixed firmly by inserting a screw (not shown) common to the screw hole N of the first housing member 21 and the screw hole (not shown) formed in the second housing member 22. In this way, to fix with the screw increases the mutual depressing force of the end face 31a on the wall 31 in the first housing member 21 and the cover member 38 in the second housing member 22. As the result, a sealing force increases in the part where the wall 31 and the cover member 38 contacts each other. Because the depressing force from the cover member 38 to the elastic member 33 increases by fixing with the screw, it is possible to increase the degree of the stick between the elastic member 33 and the cover member 38 caused by elastic deformation. Therefore, the waterproof function of the housing 20 in this second exemplary embodiment can be improved further.

In this second exemplary embodiment, the liquid crystal panel 25, the elastic member and the wall 31 of the first housing member 21 are not lined in parallel along the panel horizontal direction like the first exemplary embodiment. As the result, the liquid crystal panel 25 can be expanded without expanding the first housing member 21 in the same way as the first exemplary embodiment.

In this second exemplary embodiment, the second housing member 22 is fixed by the screw to the extended part 37 which is projecting from the wall 31 of the first housing member 21. In other words, the second housing member 22 is not fixed by the screw to the wall 31 of the first housing member 21. For this reason, the thickness of the wall 31 along the crosswise direction shown in the Fig. 4B can be reduced because the screw fixing the second housing member 22 is not needed. This is also a factor which promotes to expand the liquid crystal panel 25.

Furthermore, in this second exemplary embodiment, the depressing force of the elastic member 33 does not directly act on the liquid crystal panel 25 as same as the first exemplary embodiment. For this reason, the disadvantage such as deforming the liquid crystal panel 25 by the depressing force of the elastic member 33 can be avoided.

### (Other exemplary embodiment)

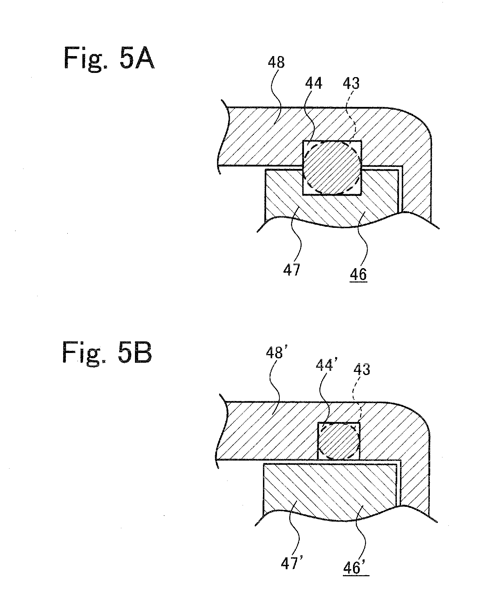

The present invention is not limited to the first and the second exemplary embodiments, and can adopt various embodiments. For example, the spaces 13 and 32 which accommodate the elastic members 14 and 33 are formed on the walls 7 and 31 in the first housing members 3, 21 in the examples in the Fig. 1A, the Fig. 4A and the Fig. 4B. In stead of this, for example, as shown in Fig. 5A, a space 44 which accommodates an elastic member 43 may be formed so as to cross a part where a wall 47 of a first housing member 46 and a second housing member 48 are contacted each other in a case that the thickness of the second housing members 4 and 22 is thick. Otherwise, as shown in Fig. 5B, a space 44' may be a space (ditch) formed on a second housing member 48' in the state opening a part where a wall 47' in a first housing member 46' and a second housing member 48' are contacted each other.

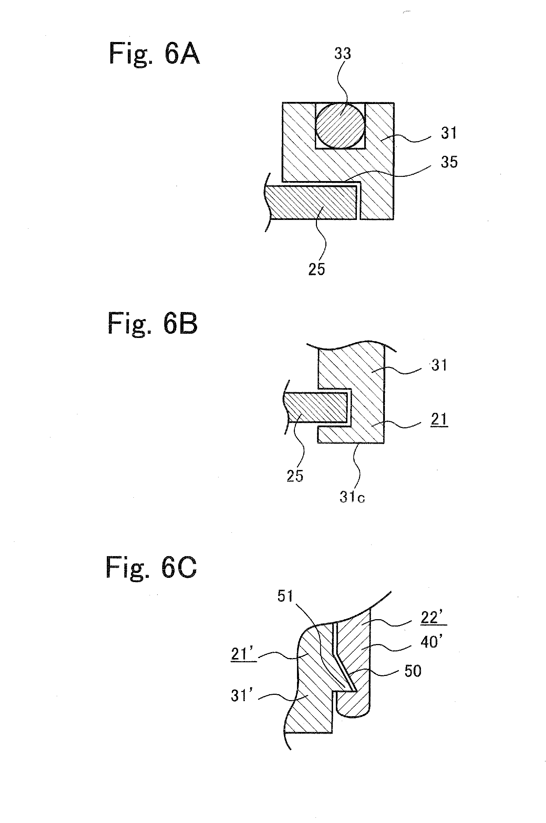

Further, a length (a depth) of the panel-edge-placing-region 35 formed on the wall 31 in width direction is set appropriately under considering a mechanical strength of the wall 31. As a result, for example, as shown in Fig. 6A, the panel-edge-placing-region 35 may be formed in an area distant from the elastic member 33 in a vertical or an approximately vertical direction to the panel surface of the liquid crystal panel 25. In this case, the edge part of the liquid crystal panel 25 may be arranged in an area which is directly under the elastic member 33 as shown in Fig. 6A.

In the second exemplary embodiment, the panel-edge-placing-region 35 opens to the end face 31c on the wall 31. On the contrary, for example, the panel-edge-placing-region 35 may not open to the end face 31c as shown in Fig. 6B. However, in this case, it may be difficult to work to accommodate the edge of the liquid crystal panel 25 in panel-edge-placing-region 35. For this reason, in this case, for example, it is useful that the first housing member 21 consists of a flexible material with the elastic characteristic or composes by a plurality of parts.

In the second embodiment, the hook (locking part) 41 is formed on the extended part 40 of the second housing member 22, while the concave part 36 which functions as the receiving part is formed on the external wall surface on the wall 31 of the first housing member 21. Instead of this, for example, as shown in Fig. 6C, a concave part 50 which functions as a locking part may be formed on an extended part 40' of a second housing member 22' and a hook 51 which functions as a receiving part may be formed on an external wall surface of a wall 31' of a first housing member 21'. In this way, the form that the first housing member and the second housing member fit each other by the hook is not limited to the second exemplary embodiment.

Furthermore, although it has been described in the second exemplary embodiment that the liquid crystal panel is for instance one of display panels, a configuration of the second exemplary embodiment can be applied in a case that a display panel other than the liquid crystal panel is accommodated.

In the second exemplary embodiment, although a mobile phone is mentioned as an example of an electronic apparatus, the electronic apparatus of the present invention can be applied to an electronic apparatus other than the mobile phone such as a personal digital assistant if the electronic apparatus is equipped with a liquid crystal panel.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2009-285885, filed on December 17, 2009, the disclosure of which is incorporated herein in its entirety by reference.

### [Industrial Applicability]

The present invention is effective for a housing of an electronic apparatus equipped with a display panel such as a liquid crystal panel, especially for a housing of an apparatus which is requested to miniaturize.

### [Reference Signs List]

1,20 housing
2 display panel
3,21 first housing member
4,22 second housing member
7,31 wall
25 liquid crystal panel
35 panel-edge-placing-region
14,33 elastic member

## Claims

1. A housing comprising:
a first housing member that includes a wall surrounding a display-panel-holding-space to hold a display panel being a holding target; and
a second housing member that closes an opening of the display-panel-holding-space whose opening edge is an end face of the wall by coming into contact with or connecting with the end face of the wall,
wherein a space that goes around the opening of the display-panel-holding-space is formed in a border region including a contacting part or a connecting part of the wall and the second housing member, an elastic member is arranged in the space, and
an edge arrangement area where an edge part of the display panel is arranged is closer to an edge face opposite side to the end face of the wall than the elastic member.

2. The housing according to claim 1, wherein a panel-edge-placing-region that holds the edge part of the display panel is formed on the wall.

3. The housing according to claim 2, wherein the panel-edge-placing-region opens to the opposite side end face of the wall.

4. The housing according to claim 1, claim 2 or claim 3, wherein the second housing member includes an extended part along an external wall surface of the wall of the first housing member, the extended part includes a locking part, and the wall includes a receiving part that stops the locking part in an engaged state, and
the first housing member and the second housing member are intertwined by stopping in the engaged state the locking part of the extended part of the second housing member with the receiving part of the wall.

5. The housing according to any one of claims 1 to 4, wherein the edge arrangement area of the display panel and the elastic member are distant in the direction which is vertical or approximately vertical to a panel surface of the display panel.

6. The housing according to any one of claims 1 to 5, further comprising:
a cover member that is arranged in a position where is an opposite side of the second housing member to the display-panel-holding-space.

7. An electronic apparatus comprising:
a housing according to any one of claims 1 to 6; and
a display panel that is held in the housing.

8. The electronic apparatus according to claim 7, wherein the display panel is a component in which a display main body, a protective member protecting the display main body and a reinforcing member reinforcing the display main body are integrated.

9. An method of holding a display panel comprising:
forming a space that goes around an opening of a display-panel-holding-space to hold a display panel being a holding target in a border region including a contact part or a connecting part of a wall surrounding the display-panel-holding-space in a first housing member and a second housing member closing an opening of the display-panel-holding-space whose opening edge is an end face of the wall by coming into contact with or connecting with the end face of the wall;
arranging an elastic member in the space; and
arranging an edge part of the display panel in an area closer to the end face opposite side to the end face of the wall than the elastic member.
